# EUROPEAN PATENT APPLICATION

(11) **EP 2 437 207 A1**
(43) Date of publication of application: **04.04.2012**
(21) Application number: 08166964.0
(22) Date of filing: 17.10.2008
(51) Int. Cl.: G06Q 10/00

(54) **Method and arangement for ranking of live web applications**

(71) Applicant: Telefonaktiebolaget LM Ericsson (publ), 164 83 Stockholm (SE)
(72) Inventor: Brodin, Per-Erik, SE-19144, SOLLENTUNA (SE); Lundkvist, Karl-Johan, SE-972 33, LULEÅ (SE)
(74) Representative: Andersson, Björn E.

(57) **Abstract**

A method of ranking a plurality of live web applications of a communication device is disclosed, The method comprises receiving (130) at least one data stream, each having a content and associated with a corresponding one of the plurality of live web applications, and evaluating (140) the content of the at least one data stream using machine-learning algorithms. The method further comprises updating (160) each of the corresponding live web applications based on the at least one data stream and determining (180) for each of the corresponding live web applications whether any user reaction occurs with the corresponding live web application in association with the updating of the corresponding live web application. The method comprises ranking (150) the plurality of live web applications relative to each other based at least on the evaluation of the content of the at least one data stream and the determinations of whether any user reaction occurred. Corresponding computer program product, arrangement and communication device are also disclosed. Rating audio or video streams.

## Description

### Technical Field

The present invention relates generally to the field of web applications. More particularly, it relates to ranking of live web applications.

### Background

A user of a communication device may have defined one or more live web applications, such as widgets, that are to be presented to the user through a user interface of the communication device.

A widget is a web application (e.g. a portable chunk of HTML - HyperText Markup Language - code) that can be installed and executed within a separate web page (e.g. by an end user) without requiring any additional compilation. A widget can also be installed and executed in a dedicated widget engine, for example on a desktop or in a mobile phone. A widget engine is a software service for users to run and display widgets.

A widget may fundamentally be viewed as a web page designed for a specific purpose but made up of standard web technologies such as HTML, CSS - Cascading Style Sheets - and JavaScript. Widget development can be rapid. The step from development to deployment of a widget may commonly be very swift (e.g. only a matter of "clicks"). Hence, as soon as a widget is developed it may be very easy to deploy and install it e.g. on a web site or in a desktop environment using a dedicated widget engine.

Widgets commonly receive data from the World Wide Web to be presented to the user. Such data may for example comprise news feeds, weather information, stock tickers, blog posts, status updates from social networking services, or the like.

When data associated with a particular widget of a communication device is received, the data content is presented (e.g. displayed graphically) to the user in that the widget is updated accordingly. The presentation may be performed in a way that makes the user aware of the updated content.

RSS - Really Simple Syndication / Rich Site Summary / RDF (Resource Description Framework) Site Summary - is often used to deliver updates and new content to the widgets.

A user may typically have multiple widgets (or other live web applications) defined for a communication device, e.g. running at the same time in the widget engine. However, there may be an upper limit regarding the number of live web applications that can be presented (e.g. visually) simultaneously to the user. For example, if the communication device is a mobile telephone the limited screen size impose such an upper limit.

Since a user may possess a vast amount of live web applications, it may be cumbersome for the user to get a good overview of which applications have been updated.

WO 2007/083210 A2 discloses a solution for an end user to obtain desired information in user interfaces. In this solution, widgets may be organized according to user preference or a default design.

US 2008/0010133 A1 discloses an advertising approach based on widgets. In this approach, user profiles may be generated based on a combination of user entered information and information inferred or derived from user behavior.

Thus, widgets may be ranked based on user preferences and/or derived information (e.g. how frequently a widget is used or its popularity among other users).

However, even if the live web applications are ranked as suggested above and displayed accordingly, it may be difficult to get a clear picture of which applications have received content that the user considers to be interesting. If there is a vast amount of live web applications running on a device, only very few of the widgets (e.g. those ranked as most interesting by the user and/or those used most frequently) may actually be displayed at all if the upper limit regarding the number of live web applications that can be presented simultaneously is tight. Hence, widgets that are potentially interesting to the user may never be presented.

Therefore, there is a need for improved methods and arrangements for ranking of live web applications of a communication device.

### Summary

It is an object of the invention to obviate at least some of the above disadvantages and to provide improved methods and arrangements for ranking live web applications.

It should be emphasized that the term "comprises/comprising" when used in this specification is taken to specify the presence of stated features, integers, steps, or components, but does not preclude the presence or addition of one or more other features, integers, steps, components, or groups thereof.

According to a first aspect of the invention, this is achieved by a method of ranking a plurality of live web applications of a communication device. The method comprises receiving at least one data stream, each having a content and associated with a corresponding one of the plurality of live web applications, and evaluating the content of the at least one data stream using machine-learning algorithms. The method further comprises updating each of the corresponding live web applications based on the at least one data stream, determining for each of the corresponding live web applications whether any user reaction occurs with the corresponding live web application in association with the updating of the corresponding live web application, and ranking the plurality of live web applications relative to each other based at least on the evaluation of the content of the at least one data stream and the determinations of whether any user reaction occurred.

In some embodiments, the step of receiving at least one data stream may comprise receiving a plurality of data streams, the step of evaluating the content of the at least one data stream may comprise evaluating the content of the plurality of data streams, and the step of ranking the plurality of live web applications relative to each other may be further based on the evaluation of the content of the plurality of data streams.

In some embodiments, the step of receiving at least one data stream may comprise receiving a plurality of data streams, and the method may further comprise updating the ranking of the plurality of live web applications for each of the received plurality of data streams.

In some embodiments, the method may further comprise using a profile ranking as an initial ranking prior to the reception of a first data stream.

In some embodiments, the ranking of the plurality of live web applications relative to each other may also be based on a time indication and/or a geographical location indication.

In some embodiments, the method may further comprise displaying at least one of the plurality of live web applications on a user interface of the communication device based on the ranking of the plurality of live web applications relative to each other.

The live web applications may be web widgets in some embodiments.

The machine-learning algorithms may comprise statistical processing in some embodiments.

In some embodiments, the step of evaluating the content of the at least one data stream using statistical processing may comprise normalizing the content, excluding certain content items from the content, and analyzing the content using a naive Bayes classifier.

In some embodiments, the content of the at least one data stream may comprise textual information and/or one or more images.

A second aspect of the invention is a computer program product comprising a computer readable medium, having thereon a computer program comprising program instructions, the computer program being loadable into a data-processing unit and adapted to cause the data-processing unit to execute method steps according to any of claims 1 to 11 when the computer program is run by the data-processing unit.

A third aspect of the invention is an arrangement for ranking a plurality of live web applications. The arrangement comprises a receiver adapted to receive at least one data stream, each data stream having a content and associated with a corresponding one of the plurality of live web applications, a live web application runtime unit adapted to update each of the corresponding live web applications based on the at least one data stream, and a ranking unit. The ranking unit is adapted to determine for each of the corresponding live web applications whether any user reaction occurs with the corresponding live web application in association with the updating of the corresponding live web application, evaluate the content of the at least one data stream using machine-learning algorithms, and rank the plurality of live web applications relative to each other based at least on the evaluation of the content of the at least one data stream and the determinations of whether any user reaction occurred.

In some embodiments, the ranking unit may comprise an analyzing unit adapted to evaluate the content of the at least one data stream using machine-learning algorithms. The analyzing unit may comprise a stemmer, a stop-list, and a naive Bayes classifier.

In some embodiments, the third aspect of the invention may additionally have features identical with or corresponding to any of the various features as explained above for the first aspect of the invention.

A fourth aspect of the invention is a communication device comprising the arrangement of the third aspect of the invention.

In some embodiments, the communication device may further comprise a user interface for displaying at least one of the plurality of live web applications based on the ranking of the plurality of live web applications relative to each other.

In some embodiments, the communication device may be a mobile terminal, a telephone, a smartphone, a personal digital assistant, a stationary computer, a laptop, a workstation, a Set-Top Box (STB) or a wristwatch.

An advantage of some embodiments of the invention is that a web application ranking is achieved that takes into account not only the identity of the web application and how often it is used, but also the actual content of the web application at a specific content update.

Thus, in some embodiments a web application updated with content that the user may find interesting is displayed with high priority, while the same web application is displayed with low priority (or not at all) if updated with content that the user probably finds uninteresting.

Another advantage of some embodiments of the invention is that a large number of web applications may be handled while only the ones with potentially interesting content are displayed.

Another advantage of some embodiments of the invention is that dynamic updating of the ranking is enabled. Thus, if the preferences of the user change, the ranking will adapt accordingly in these embodiments. The ranking applies self-learning methods in some embodiments of the invention. Therefore, according to some embodiments of the invention, an updated list of the live web applications ranked in order of importance to the user is always at disposal (e.g. for a widget engine).

Another advantage of some embodiments of the invention is that the ranking is automated.

Another advantage of some embodiments of the invention is that, in addition to the adaptation of the ranking, a preference profile may be set (e.g. by a user or in association with production), which includes an initial live web application ranking.

### Brief Description of the Drawings

Further objects, features and advantages of the invention will appear from the following detailed description of embodiments of the invention, with reference being made to the accompanying drawings, in which:
Fig. 1 is a flowchart illustrating example method steps according to some embodiments of the invention;
Fig. 2 is a block diagram illustrating an example arrangement according to some embodiments of the invention; and
Fig. 3 is a schematic drawing illustrating a mobile terminal comprising an arrangement according to some embodiments of the invention.

### Detailed Description

In the following, embodiments of the invention will be described where improved methods and arrangements for ranking of live web applications of a communication device are presented.

The live web applications may be ranked according to the relevance they have for a user. The ranking may be different over time depending of the content of current data feeds to the live web applications.

In some embodiments of the invention, data streams associated with the live web applications are analyzed and the live web applications are ranked based on the outcome of the analysis.

In some embodiments of the invention, ranking means are adapted to learn from user reactions (or absence of reaction) to an update of a live web application and to map the reaction to the content of a current data stream associated with the update.

In some embodiments, a pre-set profile ranking is used as an initial ranking.

The content of a data stream may comprise textual information and/or one or more images. Embodiments of the invention may use either or both of textual information and images to perform the ranking. Some embodiments may even use other media (such as audio and/or video content) in addition or alternatively to rank the live web applications.

For simplicity of presentation, embodiments of the invention will be described in the following with reference to web widgets (simply referred to as widgets). The invention is however not limited to widgets. Contrarily, embodiments of the invention are equally applicable to other live web applications such as, for example, gadgets and slices as will be readily understood by the skilled person.

As indicated above, a problem may arise when a user has in its possession more widgets than is possible to present simultaneously on a communication device used for presenting the widgets. Even if the user may set a preference list indicating which widgets are most interesting to the user and/or even if a ranking mechanism may learn over time which widgets are interacted with most frequently, only the few most highly ranked widgets can be displayed and the user risks missing information and updates (which are also interesting to the user) presented by other less highly ranked widgets.

For example, a news widget may receive new content and be updated very often, but the user may only be interested in news that concern sports or politics or even news that concern a particular person or event. Hence, in this example, the user would want the news widget to be highly ranked if it receives an update regarding an interesting subject and to have a low ranking at any other instant. Other examples might be a blog widget and the user only being interested in a particular subject, or a social network widget and the user only being interested in updates concerning a few particular persons of the network.

Therefore, embodiments of the invention suggest that widgets may be ranked depending on the content of the stream of data that feeds each widget.

A ranking system according to embodiments of the invention may determine and learn from user behavior what information is relevant to the user.

Then the ranking system may rank widgets accordingly based on a mapping between the content of the data streams feeding the widgets and the information considered relevant to the user.

Thus, rather than ranking widgets based on only the merits of their identity (according to a pre-set or learned user profile), embodiments of the invention may use the received information (which may often be textual data) to decide which widget is currently important and thus should be highly ranked.

In some embodiments, information regarding what the user may find interesting may be learned from user behavior and possibly supplemented by a user profile. The learning process may acknowledge which widget is accessed, how often, at what time of the day, in connection to what data content of the feed, etc. The learning process may also note a geographical location of the user when a widget is accessed. Thereby, the learning algorithm may estimate how interesting different widget updates may be to the user and arrange the widgets accordingly in a list. In a user profile, the user may enter which widgets are preferred. Alternatively or additionally, the user may enter content keywords (or "buzz-words") in the user profile.

Thus, according to embodiments of the invention, a list is provided comprising the installed widgets, where the widgets are arranged in order of relevance to the user. The list may be accessed at any point in time by a widget engine. Thus, according to some embodiments of the invention, the widget engine always has an updated list of widgets ranked in order of relevance to the user.

The ranking list may be used for many purposes. For example, it may be used to arrange the widgets visually in order of relevance. Thus, the widgets may be rearranged based on the list so that the widgets that the user may consider most interesting are visible on a screen of a communication device. This could be particularly relevant when widgets are run on a mobile phone with a limited screen size. Then, embodiments of the invention provide for that the widgets that the user may consider most interesting are visible on the screen.

According to some embodiments of the invention, the relevance of widgets and their content may differ between different users, meaning that different users find different things important or interesting.

It is noteworthy that embodiments of the invention may be used in combination with other (already existing and/or future) ranking systems in order to enhance them.

Using embodiments of the invention may allow a user to manage having more widgets in a communication device that what would otherwise have been possible.

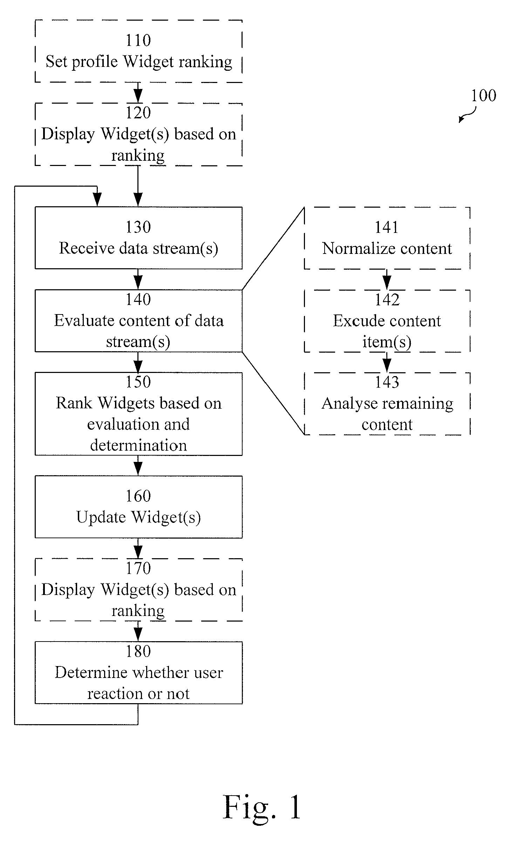

Figure 1 illustrates a method 100 for ranking of live web application such as widgets according to some embodiments of the invention. The method starts in optional step 110, where a profile comprising a widget ranking is set.

This profile may, for example, be input (and updated) by a user. The user may input a list based on widget identities (i.e. which widgets the user finds most interesting and which widgets the user finds less interesting). The user may also input one or more buzz-words. These words may be used initially to determine if the content of a data stream associated with a widget update may be interesting to the user. For example, a user interested in sports may input "sports", "football" and "Arsenal".

Alternatively or additionally a default profile may be included in connection with production of a communication device employing the method 100.

Yet alternatively or additionally, profiling may also be achieved via other users in the system, for example by collecting information regarding what other users find interesting.

In optional step 120, the widget ranking set in step 110 is used to present content of the highest ranked widgets to the user. The presentation may be visual (e.g. displaying the widgets on a screen of a communication device), but it may also take (or combine with) other forms of presentation. For example, a vibrating alert and/or audible presentation is also possible.

In step 130, a data stream comprising an update and associated with one of the widgets is received. Thereafter, in step 140, the content of the data stream received in step 130 is evaluated.

The evaluation of step 140 may comprise utilization of any statistical textual processing and matching methods that may be envisioned by the skilled person. For example, statistical textual processing used in e-mail spam filters may be applicable. In some embodiments, a naive Bayes classifier (as presented in McCallum, A. and Nigam K. "A Comparison of Event Models for Naive Bayes Text Classification", AAAI/ICML-98 Workshop on Learning for Text Categorization, pp. 41-48, Technical Report WS-98-05, AAAI Press, 1998) may be used to evaluate the data stream content.

Optional sub-steps 141, 142 and 143 illustrate an example of the operations of step 140. The example operations start in step 141 with a normalization of the data stream content. First, the actual text content may be extracted from the data stream, thus removing markup or other unwanted characters. Then, in step 141, the content is normalized, that is, words are put into a common case to improve matching. The normalization may, for example, be performed by a stemmer. Then, in step 142, some items of the content may be excluded. For example, a stop-list may contain words that are desirable to include in an analysis because they appear too often in text matter. In step 143, a naive Bayesian classifier may keep count of words that occur in the data streams. The naive Bayesian classifier may also calculate probabilities, given the specific set of words in each steam, that the user may find the information therein interesting.

The operation of step 140 (and of sub-step 143) may use information provided by step 180 (as will be described later) in the past.

The widgets are ranked in step 150 in accordance with the findings of the evaluation step 140. The ranking of step 150 may also take the initial profile ranking of step 110 into account. The ranking step 150 and/or the evaluation step 140 may also take the list of buzz-words of step 110 into account.

In step 160, the corresponding widget is updated accordingly. Then the highest ranked widgets may be presented to the user. In optional step 170, the widget ranking of step 150 is used to present content of the highest ranked widgets to the user visually. However, presentation may also take (or combine with) other forms of presentation.

In step 180, it is determined whether the update in step 160 causes any user reaction or not. A user reaction may, for example, be clicking or tapping on a widget symbol to access more elaborate information.

Depending on the embodiment, the determination of step 180 may be directly coupled to the update of step 160 (e.g. only registered if less than a certain time has elapsed since the update or if for the most recent update), or it may be more loosely coupled to the update (e.g. registered if the content of the update is at all accessible via the widget).

It is to be understood that any user reaction (e.g. in connection to step 180) and/or user input (e.g. in connection to step 110) as such is not part of the method.

After execution of step 180, the method returns to step 130, where a new data stream comprising an update and associated with the same or another one of the widgets may be received.

The above description of Figure 1 has been put forward for sequential reception and processing of data streams only. However, it is to be understood that embodiments of the invention may just as well receive (step 130) and process (steps 140, 150, 160, 170 and 180) several data streams in parallel.

In Figure 1, the steps 140 through 180 are envisaged as performed in sequence. However, the skilled person realizes that two or more of them may just as well be performed in parallel, in another order or be interconnected in other ways. For example, the ranking of step 150 may be performed as a part of the evaluation of step 140.

The determination of step 180, the evaluation of step 140 and the ranking of step 150 provide a self-learning system. Thus, the system learns over time what content of which widgets the user find interesting. The learning is achieved by evaluation of input data streams associated with widget updates and by recording of user reactions to widget updates.

The system may also learn when (e.g. at what time of the day) the user finds a particular content interesting. For example, a user may want to read sports news in the morning and in the afternoon when commuting, but during office hours stock information may be more interesting. In such embodiments, the operations of step 140 may also take the time factor into account.

The system may also learn where the user is located (using e.g. a GPS - Global Positioning Service - functionality) when the user finds a particular content interesting. For example, a user may want to read about discount offers when at the grocery store, but not when being at a sports arena. In the latter case information regarding betting odds may be more interesting. In such embodiments, the operations of step 140 may also take the geographical factor into account.

Furthermore, the self-learning system may be dynamic according to some embodiments of the invention. Thus, if user preferences change over time the system may adapt to the change. For example, a user may suddenly take an interest in the weather in the mountains a few weeks before going skiing, while this information is completely irrelevant to him during the rest of the year. Another example might be a user having a new best friend in a social network. Then, a dynamic self-learning system according to embodiments of the invention may soon rank the corresponding widget highly if that friend presents an update in a social network widget.

Dynamic adaptation of the ranking may be achieved in different ways. For example, a user reaction may be weighted such that a recent user reaction has higher impact on the ranking than an older user reaction.

It is noteworthy that the ranking according to embodiments of the invention is automated. For example, it is not based on search queries or the like.

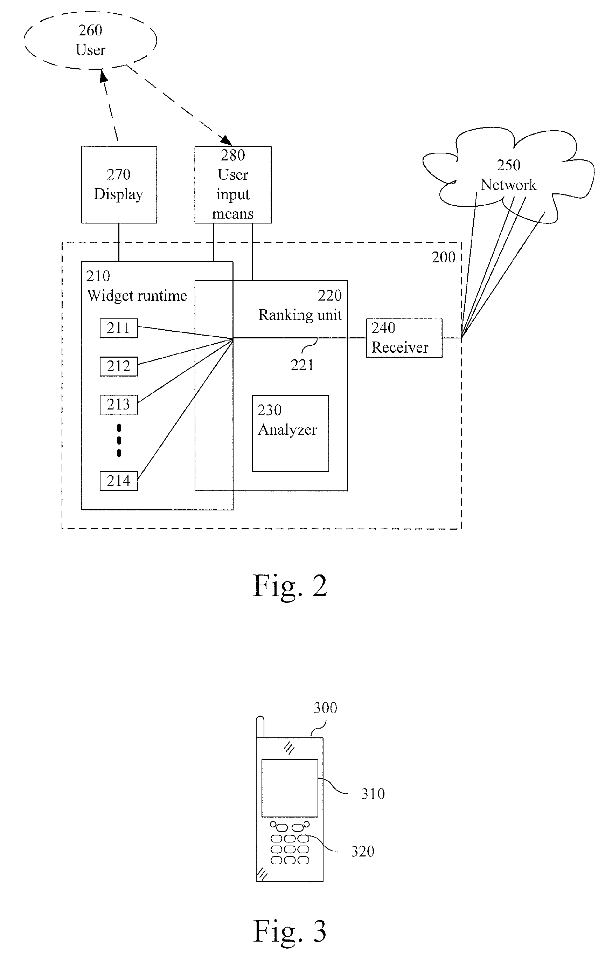

Figure 2 illustrates an arrangement 200 for ranking of live web application such as widgets and its peripheral items 250, 270, 280 according to some embodiments of the invention. The arrangement may, for example, be adapted to perform method steps as described in connection with method 100 of Figure 1. In some embodiments, peripheral items may perform some of the method steps as described in connection with method 100.

The arrangement 200 comprises a widget runtime unit 210 having a number of widgets 211, 212, 213, 214, a ranking unit 220 and a receiver 240. The ranking unit 220 may reside inside the widget runtime unit 210. Alternatively, the ranking unit 220 may be implemented partly or wholly outside the widget runtime unit 210. In some embodiments, the ranking unit 220 may even be comprised in a network 250. Thus, in such embodiments, at least part of the network is considered to be part of the arrangement 200. Some embodiments may use a proxy server in the network 250 that comprises the ranking unit 220. In such embodiments, the proxy server would send the ranking information of the ranking unit 220 to the widget runtime unit 210 of a communication device.

Each widget 211, 212, 213, 214 may receive data from a data source within the network 250 via the receiver 240. For example, the receiver 240 may be adapted to receive data streams in accordance with step 130 of method 100 as illustrated in Figure 1. As illustrated in Figure 2, the data source(s) may be external to the arrangement 200.

In other embodiments, one or more of the data sources may be comprised in the arrangement 200. An example of the latter embodiments might be an arrangement where ranking is based on content produced by the user of a communication device comprising the arrangement. The content may in such an example comprise data sent to a blog. In some embodiments, the evaluation of such content may be used to provide a higher ranking to widgets having a similar or related content (that is, a user writing about pet cats can be assumed to be interested in widgets displaying content regarding any pet animals).

In Figure 2, the widgets 211, 212, 213, 214 receive data from data sources within the same network 250. It is understood, however, that different widgets may very well receive data from data sources within different networks.

Data that is sent to any of the widgets 211, 212, 213, 214 will, according to this embodiment, pass over a data link 221 comprised in the ranking unit 220 after having been received by the receiver 240.

The ranking unit 220 may comprise an analyzer 230, adapted to examine and evaluate the content of each data stream passed over the data link 221 and classify the respective content according to probable user interest. The ranking unit 220 is adapted to rank the widgets based on the result of the classification. For example, the ranking unit 220 may be adapted to perform steps 140 and 150 of method 100 as illustrated in Figure 1.

The ranking unit 220 may be adapted to re-rank the widgets at every reception of a data stream associated with any of the widgets, at regular time intervals, or according to any other applicable scheme.

After ranking of the widgets, the widget runtime 210 arranges for presentation of the highest ranking widgets including any updates comprised in received data streams. For example, the widget runtime 210 may be adapted to perform step 160 of method 100 as illustrated in Figure 1. As mentioned before, presentation may be visual through a graphical interface such as a display 270.

A user 260 may then react to the presentation of the widgets. The reaction may for example take place via a user input means 280, which may be a keypad, a touch screen or the like. The user input means 280 may even comprise the display 270. It is to be understood that the user 260 is by no means part of the arrangement 200 or of a corresponding communication device according to embodiments of the invention.

The ranking unit 220 is adapted to register any user reaction via the user input means 280, and to take account of registered user reactions when performing the classification and/or ranking, thus providing a self-learning system. For example, the ranking unit 220 may be adapted to perform step 180 of method 100 as illustrated in Figure 1. The classification and/or ranking may also be based on a predetermined profile as explained above. Furthermore, the classification and/or ranking may also be based on a time factor as explained earlier.

The analyzer 230 may comprise machine-learning algorithms, for example as disclosed in Mitchell, Tom M., "Machine Learning", McGraw-Hill, 1997. Profile information may be provided in order to jump-start the learning process. As described above, the profile information may be input by the user (for example at initiation of the service) or set in connection to production. Profiling may also be achieved via other users in the system, for example by collecting information regarding what other users find interesting.

In some embodiments of the invention, the analyzer 230 comprises a stemmer, a stop-list of words, and a naïve Bayes text classifier (as presented in McCallum, A. and Nigam K. "A Comparison of Event Models for Naive Bayes Text Classification", references earlier). A naïve Bayes classifier may be used to evaluate data stream content and determine which information is to be considered interesting.

In such embodiments, the actual text content may be extracted from the data streams passing over the data link 221 in the ranking unit 220, thus removing markup or other unwanted characters. The stemmer may normalize words into their common case to improve matching. The stop-list may contain words that are not relevant to use in the evaluation because they appear too frequently in textual data. Finally, the Bayesian classifier may keep count of words that occur in the data stream. Based on these counts, the classifier may calculate the probability, for each of the data streams given the specific set of words in the steam, that the user may find the information therein interesting. The ranking unit 220 may then use the calculated probability of each stream to determine the ranking of the corresponding widget. The user can then be presented with the top ranking widgets. Depending on user reactions, feedback may be provided to the ranking unit 220 for further learning.

Figure 3 illustrates an example mobile terminal 300. The mobile terminal 300 may be adapted to connect to a mobile telecommunication or other network via a wireless link. The mobile terminal 300 may comprise an arrangement for ranking of widgets according to embodiments of the invention. The mobile terminal 300 may, for example, comprise the arrangement 200 as described in connection to Figure 2.

In some embodiments, the mobile terminal 300 may additionally comprise user interfaces, such as a screen 310 and a keypad 320. The display 270 as described in connection to Figure 2, may, for example, correspond to the screen 320. The user input means 280 as described in connection to Figure 2, may, for example, correspond to the either or both of the screen 310 and the keypad 320.

The mobile terminal 300 is illustrated as a mobile telephone in a schematic front view. The mobile terminal 300 may further comprise a loudspeaker, and a microphone, which together with the screen 310 and the keypad 320 provide a man-machine interface for operating the mobile terminal. The mobile terminal 300 may also comprise one or more external or internal antennas.

The described embodiments of the invention and their equivalents may be realised in software or hardware or a combination thereof. They may be performed by general-purpose circuits associated with or integral to a communication device, such as digital signal processors (DSP), central processing units (CPU), co-processor units, field-programmable gate arrays (FPGA) or other programmable hardware, or by specialized circuits such as for example application-specific integrated circuits (ASIC) or hard-wired components. All such forms and combinations thereof are contemplated to be within the scope of the invention.

The invention may be embodied within an electronic apparatus comprising circuitry/logic or performing methods according to any of the embodiments of the invention. The electronic apparatus may, for example, be a portable or handheld mobile radio communication equipment, a mobile radio terminal, a mobile telephone, a communicator, an electronic organizer, a smartphone, a computer, a notebook, a mobile gaming device, or a watch.

According to some embodiments of the invention, a computer program product comprises a computer readable medium such as, for example, a diskette or a CD-ROM. The computer readable medium may have stored thereon a computer program comprising program instructions. The computer program may be loadable into a data-processing unit, which may, for example, be comprised in a mobile terminal. When loaded into the data-processing unit, the computer program may be stored in a memory associated with or integral to the data-processing unit. According to some embodiments, the computer program may, when loaded into and run by the data-processing unit, cause the data-processing unit to execute method steps according to, for example, the method shown in Figure 1.

The invention has been described herein with reference to various embodiments. However, a person skilled in the art would recognize numerous variations to the described embodiments that would still fall within the scope of the invention. For example, the method embodiments described herein describes example methods through method steps being performed in a certain order. However, it is recognized that these sequences of events may take place in another order without departing from the scope of the invention. Furthermore, some method steps may be performed in parallel even though they have been described as being performed in sequence.

In the same manner, it should be noted that, in the description of embodiments of the invention, the partition of functional blocks into particular units is by no means limiting to the invention. Contrarily, these partitions are merely examples. Functional blocks described herein as one unit may be split into two or more units. In the same manner, functional blocks that are described herein as being implemented as two or more units may be implemented as a single unit without departing from the scope of the invention.

Hence, it should be understood that the limitations of the described embodiments are merely for illustrative purpose and by no means limiting. Instead, the scope of the invention is defined by the appended claims, and all variations that fall within the range of the claims are intended to be embraced therein.

## Claims

1. A method of ranking a plurality of live web applications of a communication device, comprising:
receiving (130) at least one data stream, each having a content and associated with a corresponding one of the plurality of live web applications;
evaluating (140) the content of the at least one data stream using machine-learning algorithms;
updating (160) each of the corresponding live web applications based on the at least one data stream;
determining (180) for each of the corresponding live web applications whether any user reaction occurs with the corresponding live web application in association with the updating of the corresponding live web application; and
ranking (150) the plurality of live web applications relative to each other based at least on the evaluation of the content of the at least one data stream and the determinations of whether any user reaction occurred.

2. The method of claim 1, wherein the step of receiving at least one data stream comprises receiving (130) a plurality of data streams, the step of evaluating the content of the at least one data stream comprises evaluating the content of the plurality of data streams, and the step of ranking the plurality of live web applications relative to each other is further based on the evaluation of the content of the plurality of data streams.

3. The method of any of claims 1 through 2, wherein the step of receiving at least one data stream comprises receiving (130) a plurality of data streams, and further comprising:
updating the ranking (150) of the plurality of live web applications for each of the received plurality of data streams.

4. The method of any of claims 1 through 3, further comprising using (110) a profile ranking as an initial ranking prior to the reception of a first data stream.

5. The method of any of claims 1 through 4, wherein the ranking of the plurality of live web applications relative to each other is also based on a time indication.

6. The method of any of any of claims 1 through 5, wherein the ranking of the plurality of live web applications relative to each other is also based on a geographical location indication.

7. The method of any of claims 1 through 6, further comprising:
displaying (120, 170) at least one of the plurality of live web applications on a user interface of the communication device based on the ranking of the plurality of live web applications relative to each other.

8. The method of any of claims 1 through 7, wherein the live web applications are web widgets.

9. The method of any of claims 1 through 8, wherein the machine-learning algorithms comprise statistical processing.

10. The method of claim 9, wherein the step of evaluating the content of the at least one data stream using statistical processing comprises:
normalizing (141) the content;
excluding (142) certain content items from the content; and
analyzing (143) the content using a naive Bayes classifier.

11. The method of any of claims 1 through 10, wherein the content of the at least one data stream comprises at least one of:
textual information; and
one or more images.

12. A computer program product comprising a computer readable medium, having thereon a computer program comprising program instructions, the computer program being loadable into a data-processing unit and adapted to cause the data-processing unit to execute method steps according to any of claims 1 to 11 when the computer program is run by the data-processing unit.

13. An arrangement for ranking a plurality of live web applications (211, 212, 213, 214) comprising:
a receiver (240) adapted to receive at least one data stream, each data stream having a content and associated with a corresponding one of the plurality of live web applications;
a live web application runtime unit (210) adapted to update each of the corresponding live web applications based on the at least one data stream; and
a ranking unit (220) adapted to:
determine for each of the corresponding live web applications whether any user reaction occurs with the corresponding live web application in association with the updating of the corresponding live web application;
evaluate the content of the at least one data stream using machine-learning algorithms; and
rank the plurality of live web applications relative to each other based at least on the evaluation of the content of the at least one data stream and the determinations of whether any user reaction occurred.

14. The arrangement of claim 13, wherein the receiver is adapted to receive a plurality of data streams, and the ranking unit is adapted to evaluate the content of the plurality of data streams and rank the plurality of live web applications relative to each other further based on the evaluation of the content of the plurality of data streams.

15. The arrangement of any of claims 13 through 14, wherein
the receiver is adapted to receive a plurality of data streams; and
the ranking unit is further adapted to update the ranking of the plurality of live web applications for each of the received plurality of data streams.

16. The arrangement of any of claims 13 through 15, wherein the ranking unit is further adapted to use a profile ranking as an initial ranking prior to the reception of a first data stream.

17. The arrangement of any of claims 13 through 16, wherein the ranking unit is further adapted to base the ranking of the plurality of live web applications relative to each other on a time indication.

18. The arrangement of any of any of claims 13 through 17, wherein the ranking unit is further adapted to base the ranking of the plurality of live web applications relative to each other on a geographical location indication.

19. The arrangement of any of claims 13 through 18, wherein the live web applications are web widgets.

20. The arrangement of any of claims 13 through 19, wherein the ranking unit comprises an analyzing unit (230) adapted to evaluate the content of the at least one data stream using machine-learning algorithms.

21. The arrangement of any of claims 13 through 20, wherein the machine-learning algorithms comprise statistical processing.

22. The arrangement of claim 20, wherein the analyzing unit comprises:
a stemmer;
a stop-list; and
a naïve Bayes classifier.

23. The arrangement of any of claims 13 through 22, wherein the content of the at least one data stream comprises at least one of:
textual information; and
one or more images.

24. A communication device (300) comprising the arrangement of any of any of claims 13 through 23.

25. The communication device according to claim 24, further comprising a user interface (270, 310) for displaying at least one of the plurality of live web applications based on the ranking of the plurality of live web applications relative to each other.

26. The communication device according to any of claims 24 through 25, wherein the communication device is a mobile terminal, a telephone, a smartphone, a personal digital assistant, a stationary computer, a laptop, a workstation, a Set-Top Box - STB - or a wristwatch.

## Amended claims

### Amended claims in accordance with Rule 137(2) EPC.

**1.** A method for a communication device of ranking a plurality of live web applications of the communication device, comprising:
receiving (130) at least one data stream at a receiver of the communication device, each data stream having a textual content and associated with a corresponding one of the plurality of live web applications;
evaluating (140) the textual content of the at least one data stream at a ranking unit associated with the communication device;
updating (160) each of the corresponding live web applications based on the at least one data stream using a live web application runtime unit of the communication device;
determining (180), at the ranking unit, for each of the corresponding live web applications whether any user reaction occurs with the corresponding live web application, via a user input means of the communication device, in association with the updating of the corresponding live web application;
using machine-learning algorithms to determine, at the ranking unit, a type of information as user-relevant information for the communication device based on the determination of whether any user reaction occurs via the user input means of the communication device; and
ranking (150), at the ranking unit, the plurality of live web applications relative to each other based at least on a mapping between the evaluated textual content of the at least one data stream and the type of information determined as user-relevant information.

**2.** The method of claim 1, wherein the step of receiving at least one data stream comprises receiving (130) a plurality of data streams, the step of evaluating the textual content of the at least one data stream comprises evaluating the textual content of the plurality of data streams, and the step of ranking the plurality of live web applications relative to each other is further based on the evaluation of the textual content of the plurality of data streams.

**3.** The method of any of claims 1 .through 2, wherein the step of receiving at least one data stream comprises receiving (130) a plurality of data streams, and further comprising:
updating the ranking (150) of the plurality of live web applications for each of the received plurality of data streams.

**4.** The method of any of claims 1 through 3, further comprising using (110) a profile ranking as an initial ranking prior to the reception of a first data stream.

**5.** The method of any of claims 1 through 4, wherein the ranking of the plurality of live web applications relative to each other is also based on a time indication.

**6.** The method of any of any of claims 1 through 5, wherein the ranking of the plurality of live web applications relative to each other is also based on a geographical location indication.

**7.** The method of any of claims 1 through 6, further comprising:
displaying (120, 170) at least one of the plurality of live web applications on a user interface of the communication device based on the ranking of the plurality of live web applications relative to each other.

**8.** The method of any of claims 1 through 7, wherein the live web applications are web widgets.

**9.** The method of any of claims 1 through 8, wherein the machine-learning algorithms comprise statistical processing.

**10.** The method of claim 9, wherein the steps of evaluating the textual content of the at least one data stream using statistical processing and using machine-learning algorithms to determine a type of information as user-relevant information comprises:
normalizing (141) the content;
excluding (142) certain content items from the content; and
analyzing (143) the content using a naïve Bayes classifier.

**11.** The method of any of claims 1 through 10, wherein a content of the at least one data stream further comprises one or more images.

**12.** A computer program product comprising a computer readable medium, having thereon a computer program comprising program instructions, the computer program being loadable into a data-processing unit and adapted to cause the data-processing unit to execute method steps according to any of claims 1 to 11 when the computer program is run by the data-processing unit.

**13.** An arrangement for ranking a plurality of live web applications (211, 212, 213, 214) comprising:
a receiver (240) adapted to receive at least one data stream, each data stream having a textual content and associated with a corresponding one of the plurality of live web applications;
a live web application runtime unit (210) adapted to update each of the corresponding live web applications based on the at least one data stream; and
a ranking unit (220) adapted to:
determine for each of the corresponding live web applications whether any user reaction occurs with the corresponding live web application in association with the updating of the corresponding live web application;
evaluate the textual content of the at least one data stream;
use machine-learning algorithms to determine a type of information as user-relevant information for the communication device based on the determination of whether any user reaction occurs via a user input means of the communication device; and
rank the plurality of live web applications relative to each other based at least on a mapping between the evaluated textual content of the at least one data stream and the type of information determined as user-relevant information.

**14.** The arrangement of claim 13, wherein the receiver is adapted to receive a plurality of data streams, and the ranking unit is adapted to evaluate the textual content of the plurality of data streams and rank the plurality of live web applications relative to each other further based on the evaluation of the textual content of the plurality of data streams.

**15.** The arrangement of any of claims 13 through 14, wherein
the receiver is adapted to receive a plurality of data streams; and
the ranking unit is further adapted to update the ranking of the plurality of live web applications for each of the received plurality of data streams.

**16.** The arrangement of any of claims 13 through 15, wherein the ranking unit is further adapted to use a profile ranking as an initial ranking prior to the reception of a first data stream.

**17.** The arrangement of any of claims 13 through 16, wherein the ranking unit is further adapted to base the ranking of the plurality of live web applications relative to each other on a time indication.

**18.** The arrangement of any of any of claims 13 through 17, wherein the ranking unit is further adapted to base the ranking of the plurality of live web applications relative to each other on a geographical location indication.

**19.** The arrangement of any of claims 13 through 18, wherein the live web applications are web widgets.

**20.** The arrangement of any of claims 13 through 19, wherein the ranking unit comprises an analyzing unit (230) adapted to evaluate the textual content of the at least one data stream and use machine-learning algorithms to determine a type of information as user-relevant information.

**21.** The arrangement of any of claims 13 through 20, wherein the machine-learning algorithms comprise statistical processing.

**22.** The arrangement of claim 20, wherein the analyzing unit comprises:
a stemmer;
a stop-list; and
a naïve Bayes classifier.

**23.** The arrangement of any of claims 13 through 22, wherein a content of the at least one data stream further comprises one or more images.

**24.** A communication device (300) comprising the arrangement of any of any of claims 13 through 23.

**25.** The communication device according to claim 24, further comprising a user interface (270, 310) for displaying at least one of the plurality of live web applications based on the ranking of the plurality of live web applications relative to each other.

**26.** The communication device according to any of claims 24 through 25,
wherein the communication device is a mobile terminal, a telephone, a smartphone, a personal digital assistant, a stationary computer, a laptop, a workstation, a Set-Top Box - STB - or a wristwatch.
